(19) **Europäisches Patentamt / European Patent Office / Office européen des brevets**

(11) **EP 1 765 034 A1**

(12) **EUROPEAN PATENT APPLICATION**

(43) Date of publication:
**21.03.2007 Bulletin 2007/12**

(51) Int Cl.:
***H04Q 7/38*** (2006.01)

(21) Application number: **06125412.4**

(22) Date of filing: **11.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.03.2002 US 365355**
**21.11.2002 US 301001**

(62) Document number(s) of the earlier application(s) in accordance with Art. 76 EPC:
**03726047.8 / 1 486 082**

(71) Applicant: **InterDigital Patent Corporation Wilmington, DE 19801 (US)**

(72) Inventor: **Zhang, Guodong**
**Parchogue, NY 11772 (US)**

(74) Representative: **Ahrengart, Kenneth**
**Awapatent AB**
**P.O. Box 45086**
**104 30 Stockholm (SE)**

Remarks:
This application was filed on 05 - 12 - 2006 as a divisional application to the application mentioned under INID code 62.

(54) **Method and apparatus for performing call admission control in the uplink for third generation wireless communication systems**

(57) A method and system for performing call admission control in wireless communication systems is disclosed. Resource units required by a new user are assigned based on an outage probability of each uplink timeslot. The outage probability (20) of each timeslot is updated as the resource units are assigned so that each resource unit assignment results in the lowest possible contribution to total outage probability. Once all of the resource units are assigned, the total outage probability is computed based on the resource allocation. If the total outage probability is below a predetermined value, the new user is admitted. If the total outage probability (32) is above the predetermined value, the new user is rejected.

FIG. 1

## Description

BACKGROUND

The present invention relates to the field of communications, specifically wireless communications. More specifically, the present invention relates to call admission control in third generation wireless systems.

Third generation wireless communications, such as wideband code division multiple access time division duplex (WCDMA-TDD) systems, will support not only voice service, but also a wide range of broadband services, such as video and Internet traffic. In such a system, the goal of call admission control is to guarantee that the quality of service (QoS) is met for all users admitted into the system. Call admission control directly affects the QoS of mobile users, and the stability and capacity of the system. Therefore, call admission control is very important for the design of WCDMA-TDD systems.

In recent years, there have been some advances regarding call admission control in WCDMA-FDD systems but few in WCDMA-TDD systems. One such system addresses the problem by making resource allocation based on a fixed required signal to interference ratio (SIR). In WCDMA-TDD systems, however, the required SIR of a user is not fixed and, in contrast, changes with time because of imperfect power control. In WCDMA-FDD systems, there are no timeslots whereas in WCDMA-TDD systems a user can use more than one timeslot.

A need therefore exists for providing call admission control for TDD systems.

SUMMARY

The present invention is a system and method for performing call admission control where admission decisions are based on a dynamic SIR requirement and the assumption that a user can use multiple timeslots. The present invention is implemented without using online measurement, thereby avoiding software and hardware implementation costs attributed thereto.

BRIEF DESCRIPTION OF THE DRAWING(S)

Figure 1 is a method for performing call admission control in the uplink for third generation wireless communication systems in accordance with the preferred embodiment of the invention.

Figure 2 is a call admission control system in accordance with the preferred embodiment of the invention.

DETAILED DESCRIPTION OF THE PREFERRED EMBODIMENT(S)

In accordance with the present invention, call admission control is performed in WCDMA-TDD systems (where users can use multiple timeslots) while taking into account the fact that each user's required signal to interference ratio (SIR) is a random variable. Resource allocation is optimized so as to yield the lowest total outage probability ($P_{out\text{-}total}$) for a new user and to ensure $P_{out\text{-}total}$ is below a predetermined value.

The present invention is preferably implemented using the following assumptions. First, as specified by the Third Generation Partnership Project (3GPP) standards, each frame is divided into 15 timeslots. Second, the chip rate of a WCDMA-TDD system is 3.84Mcps making the equivalent chip rate in one timeslot 256kcps (i.e. 3.84Mcps/15 = 256kcps). Third, a multi-user detection (MUD) receiver is used at the base station (BS).

In each timeslot, Orthogonal Variable Spreading Factor (OVSF) codes are used for channelization codes. The spreading factor of a channelization code can take a value of 2, 4, 8, and 16 in the uplink. For purposes of describing the present invention, a resource unit (RU) corresponds to a particular physical channel and is defined as a channelization code having spreading factor 16 in a particular time slot. RUs therefore correspond to physical channels in a particular timeslot.

For a new user seeking admission to a cell, the primary goal of call admission control is to properly allocate RUs (i.e. physical channels) so that QoS requirements are guaranteed, for both the new user and any users already in the cell. The number of RUs required by a new user depends on the type of call the new user has placed. For example, a new user placing a voice call requires two RUs while a new user placing a 64k data call requires five RUs.

Decisions made by a call admission control system are based on whether RUs can be allocated successfully for the new user. Whether a RU can be allocated successfully for a new user depends on the individual outage probabilities ($P_{out}$) for all of the timeslots in which RUs have been assigned. Therefore, $P_{out}$ is the probability that, in a particular timeslot, a user's required SIR will be below a certain predetermined value. In WCDMA-TDD systems, however, the required SIR of each user is not fixed, but follows a certain distribution thereby making $P_{out}$ difficult to calculate. That is, even though the distribution of the SIR is known, the computation of $P_{out}$ is still very complex, and cannot be done in real time.

The Gaussian approximation, in contrast, provides a sufficiently approximate result and has relatively low computation complexity. Therefore, the Gaussian approximation approach is used to allow the RNC (Radio Network Controller) to compute $P_{out}$ for each timeslot and make resource allocation decisions in real time.

The $P_{out}$ of every timeslot assigned to a new user may be combined to compute $P_{out\text{-}total}$ for the new user. Assuming a new user is allocated RUs in a particular number of timeslots, the $P_{out\text{-}total}$ of a new user is defined as the probability that an outage will occur in at least one of those timeslots. The $P_{out\text{-}total}$ may be computed as desired. By way of example, $P_{out\text{-}total}$ may be computed according to $P_{out-total} = 1 - \prod_{i=\Omega} (1 - P_{out}(i))$, where $\Omega$ is the set of timeslots in which RUs have been allocated to the user.

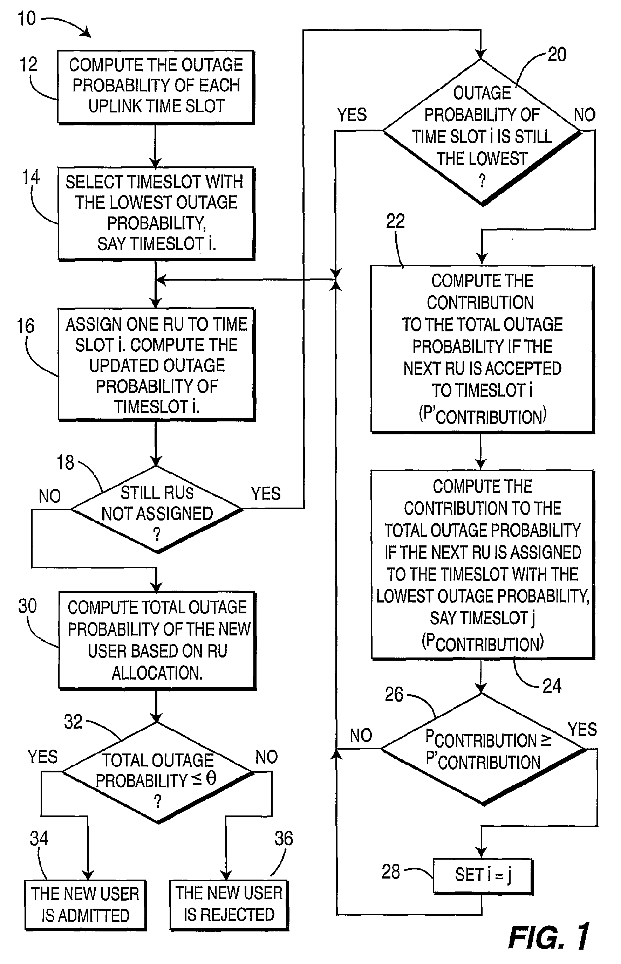

Referring now to Figure 1, a method 10 is shown wherein call admission control is performed in the uplink for third generation wireless communication systems. Assuming, purely for purposes of describing the invention, that a new user requires two RUs (i.e. the new user has placed a voice call), the method 10 begins in step 12 by computing the current $P_{out}$ of each uplink timeslot. Again, $P_{out}$ is the probability that a new user's SIR is below a predetermined value in a particular timeslot and is computed for each uplink timeslot. Therefore, in step 12, the probability of the new user's SIR being below the predetermined value is computed for each timeslot. As explained, $P_{out}$ accounts for the fact that the user's SIR changes with time and is computed by the RNC using the Gaussian approximation to reduce computation complexity.

Once $P_{out}$ has been computed for each timeslot, the timeslot having the lowest $P_{out}$, say timeslot $i$, is selected in step 14. Since timeslot $i$ is the timeslot with the lowest $P_{out}$, the $P_{out}$ in timeslot $i$ is denoted $P_{out}(i)$. In step 16, one RU is assigned to timeslot $i$ and $P_{out}(i)$ is updated accordingly. Once the first RU has been assigned, the method proceeds to step 18. In step 18, the method determines whether additional RUs need to be assigned. As mentioned, for purposes of describing the invention, it can be assumed that the new user requires two RUs. Therefore, the determination in step 18 will be positive and the method will proceed to step 20.

In step 20, the method determines whether $P_{out}(i)$ is still the lowest $P_{out}$ (i.e. the method determines whether, despite being assigned a RU, timeslot $i$ still has the lowest $P_{out}$). If $P_{out}(i)$ is still the lowest $P_{out}$, the method goes back to step 16 and the second RU is assigned to timeslot $i$ and continues as indicated. If, in contrast, $P_{out}(i)$ is no longer the lowest $P_{out}$, the method proceeds to step 22. In step 22, $P'_{contribution}$ is computed. The $P'_{contribution}$ is the contribution to $P_{out-total}$ assuming the next RU (i.e. the second RU according to the assumption noted above) is accepted to timeslot $i$ despite the fact that $P_{out}(i)$ is no longer the lowest $P_{out}$. The $P'_{contribution}$ is the same value as the new $P_{out}$ of timeslot $i$. That is, $P'_{contribution}$ is equal to $P_{out}(i)'$.

In step 24, $P_{contribution}$ is computed. The $P_{contribution}$ is the contribution to $P_{out-total}$ assuming the next RU (i.e. the second RU according to the assumption noted above) is accepted to the timeslot having the lowest $P_{out}$, say timeslot $j$. The $P_{contribution}$ is given by $P_{contribution}=1-(1-P_{out}(i))\cdot(1-P_{out}(j))$. Once $P'_{contribution}$ and $P_{contribution}$ have been computed, the method proceeds to step 26 where it determines whether $P_{contribution}$ is greater than or equal to $P'_{contribution}$ (i.e. $P_{out}(i)'$). If $P_{contribution}$ is greater than or equal to $P'_{contribution}$,

the method proceeds to step 16 wherein the next RU will be assigned to timeslot $i$ despite the fact that timeslot $i$ no longer has the lowest $P_{out}$. That is, even though timeslot $i$ no longer has the lowest $P_{out}$, assigning the next RU to timeslot $i$ will result in a lower $P_{out-total}$ than assigning the next RU to timeslot $j$, which actually has the lowest $P_{out}$. If, in contrast, $P_{contribution}$ is less than $P'_{contribution}$, $i$ is set equal to $j$ in step 28 and the method proceeds to step 16. The method sets $i$ equal to $j$ so that, in step 16, the next RU is assigned to timeslot $j$ because assigning the next RU to timeslot $j$ will result in the lowest $P_{out-total}$.

From step 16, the method again proceeds to step 18. Note, steps 20 through 28 would not have been necessary where the new user only needed one RU. But, because in the assumption of the example the user needed two RUs, one run through steps 20 through 28 was necessary in order to determine the optimal allocation of the second RU. Steps 20 through 28 are performed, as needed, for every RU required by the user. Once all of the RUs have been assigned, the method proceeds to step 30. In step 30, $P_{out-total}$ is computed to determine the outage probability of the new user based on the allocation of RU(s), as allocated in steps 12 through 28.

In step 32, the method determines whether $P_{out-total}$ is less than or equal to a predetermined value, say $\theta$. The predetermined value $\theta$ is an operator dependent parameter and may be any value, as desired, depending on the desired level of network stability. If $P_{out-total}$ is less than $\theta$, the new user is admitted (step 34). If not, the new user is rejected (step 36).

Pursuant to the present invention, $P_{out-total}$ increases as the number of users increases and saturates around the predetermined value $\theta$ thereby dramatically improving system stability (i.e. the number of dropped calls). Due to the stringent admission standards, the present invention also results in a dramatic increase in blocking probability (which also increases as the number of users) in comparison to static sequential and random call admission control methods. The combination of increased stability and blocking probability significantly improves users QoS as, from a user's perspective, having a call blocked is much more preferable than having a call dropped.

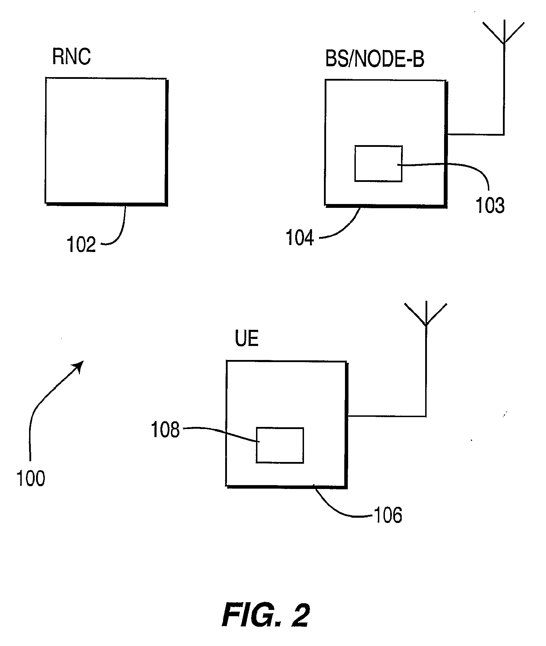

Referring now to Figure 2, a system 100 is shown for implementing call admission control according to the present invention. The system 100 comprises a RNC 102, a BS or Node-B 104 and user equipment (UE) 106 wherein the BS and UE each have a multi-user detection (MUD) receiver 103, 108, respectively.

When the UE 106 is used by a user to place a call, the RNC 102 will perform call admission control and allocate RUs required by that new call to appropriate timeslots so as to ensure the lowest possible $P_{out-total}$ and to ensure that $P_{out-total}$ remains below the predetermined threshold $\theta$.

To perform call admission control, the RNC 102 computes $P_{out}$ for every uplink timeslot and assigns a RU to the timeslot with the lowest $P_{out}$. If there are additional RUs required by the new user that need to be allocated, the RNC 102 will assign subsequent RUs to the same timeslot the previous RU was assigned to, so long as that timeslot still has the lowest $P_{out}$. If that timeslot no longer has the lowest $P_{out}$, the RNC 102 will determine whether it still should assign subsequent RUs to that timeslot or to the timeslot now having the lowest $P_{out}$. To make that determination the RNC 103 determines which timeslot results in the lowest contribution to $P_{out\text{-}total}$. The RNC repeats this analysis for every RU required by the new call.

Once all of the RUs that are required by the new user have been allocated to particular timeslots, the RNC 103 determines whether the allocation results in $P_{out\text{-}tolal}$ being below the predetermined θ. If $P_{out\text{-}total}$ is below θ, the new user is admitted. If not, the new user is rejected.

Although the present invention has been described in detail, it is to be understood that the invention is not limited thereto, and that various changes can be made therein without departing from the spirit and scope of the invention, which is defined by the attached claims.

**Itemized list of embodiments**

Item 1. A method for performing call admission control comprising:

assigning resource units required by a new user to timeslots based on outage probability of each individual timeslot;
computing a total outage probability for the new user;
determining whether the total outage probability is below a predetermined value; and
admitting the new user where the determination is positive.

Item 2. A method as in item 1 wherein the step of assigning resource units is performed by:

computing an outage probability for each timeslot;
assigning a first resource unit to the timeslot having the lowest outage probability; and
assigning subsequent resource units to timeslots that will result in the lowest total outage probability for the new user.

Item 3. A method as in item 2 wherein the timeslots that will result in the lowest total outage probability are selected based on each of their individual contributions to total outage probability.

Item 4. A method for performing call admission control comprising:

computing an outage probability for each uplink timeslot;
assigning a first resource unit required by a new user to the timeslot having the lowest outage probability;
assigning subsequent resource units required by the new user to timeslots that will result in the lowest total outage probability for the new user;
computing a total outage probability based on which timeslots have been assigned resource units; and
admitting the new user if the total outage probability is below a predetermined value.

Item 5. A method as in item 4 wherein the time slots that will result in the lowest total outage probability for the new user are identified by identifying the timeslots that contribute the least to the total outage probability of the user.

Item 6. A method for performing call admission control comprising:

computing an outage probability for each timeslot;
identifying a timeslot having the lowest outage probability;
assigning a first resource unit required by a new user to the identified timeslot;
assigning subsequent resource units required by the new user to a group of timeslots that minimizes total outage probability of the new user;
computing a total outage probability based on which timeslots have been assigned resource units; and
admitting the new user if total outage probability is less than a predetermined value.

Item 7. A method as in item 6 wherein each timeslot in the group of timeslots is selected based on its individual contribution to total outage probability.

Item 8. A method as in item 6 wherein the step of assigning subsequent resources further comprises:

computing a first value indicative of the contribution to the total outage probability if a subsequent resource unit is assigned to the identified timeslot;
computing a second value indicative of the contribution to the total outage probability if a subsequent resource unit is assigned to a timeslot other than the identified timeslot;
continuing to assign subsequent resource units to the identified timeslot as long as the second value is not greater than or equal to the first value; and
assigning subsequent resource units to a timeslot other than the identified timeslot if the second value is greater than or equal to the first value.

Item 9. A call admission control system comprising:

user equipment;
a base station; and
a radio network controller wherein the radio network controller is adapted to:

assign resource units required by a new user to a plurality of timeslots based on each timeslots individual contribution to total outage probability of the new user; and
admit the new user where the total outage probability of the new user is below a predetermined value.

Item 10. A call admission control system as in item 9 wherein the radio network controller is adapted to:

compute an outage probability for each uplink timeslot each time a new user seeks admission;
assign a first resource unit required by the new user to the timeslot having the lowest outage probability;
assign subsequent resource units required by the new user to a group of timeslots that will result in the lowest total outage probability for the new user; and
admit the new user if total outage probability is below a predetermined value.

Item 11. A call admission control system as in item 10 wherein each timeslot in the group of timeslots is selected based on its individual contribution to total outage probability.

Item 12. A call admission control system as in item 10 wherein the radio network controller is configured to select the group of timeslots by:

computing a first value indicative of the contribution to the total outage probability if a subsequent resource unit is assigned to the identified timeslot;
computing a second value indicative of the contribution to the total outage probability if a subsequent resource unit is assigned to a timeslot other than the identified timeslot;
continuing to assign subsequent resource units to the identified timeslot as long as the second value is not greater than or equal to the first value; and
assigning subsequent resource units to a timeslot other than the identified timeslot if the second value is greater than or equal to the first value.

**Claims**

1. A method for performing call admission control (CAC) in real time in a wireless communication system, comprising, at least one user equipment (UE), at least one base station, and a radio network controller (RNC), said method comprising:

said UE:

requesting communication with said network;

said RNC comprising:

calculating an outage probability for each uplink timeslot;
selecting a timeslot having a lowest outage probability;
assigning a resource unit (RU) to the selected timeslot and
recalculating the outage probability; and
accepting the UE when the recalculated outage probability of the UE is below a predetermined value;
wherein the outage probabilities calculated by said RNC are performed using Gaussian approximations.

2. The method of claim 1, said RNC further comprising:

recalculating the outage probability for the selected timeslot when the UE requires a second RU;
assigning an RU to the selected timeslot when the recalculated outage probability indicates that the selected timeslot continues to have the lowest outage probability;
calculating a total outage probability based on the RUs allocated to the UE; and
accepting the UE when the calculated total outage probability of the UE, based on the allocation of two RUs, is below a predetermined value.

3. The method of claim 2, wherein the recalculated outage probability and the total outage probability calculated by said RNC are performed using Gaussian approximations.

4. The method of claim 1, said RNC further comprising:

calculating a first contribution to the total outage probability if a second RU is assigned to the selected timeslot when the UE requires a second RU;
calculating a second contribution to the total outage probability if the second RU is assigned to another timeslot other than the selected timeslot which other timeslot has a lower outage probability than the selected timeslot; and
assigning the second RU to the selected timeslot when the first contribution is greater than the second contribution.

5. The method of claim 4 wherein the first and second contributions calculated by said RNC are performed using Gaussian approximations.

6. The method of claim 4, the RNC:

calculating total outage probability for the UE based on total RU allocation; and
accepting the UE when the calculated total outage probability of the UE is below a predetermined value.

7. The method of claim 6 wherein the total outage probability for the UE is performed using Gaussian approximations.

8. The method of claim 6, the RNC:

calculating total outage probability for the UE based on total RU allocation; and
rejecting the UE when the calculated total outage probability of the UE is greater than a predetermined value.

9. The method of claim 1, said RNC further comprising:

calculating a first contribution to the total outage probability if the second RU is assigned to the selected timeslot when the UE requires a second RU;
calculating a second contribution to the total outage probability if the second RU is assigned to another timeslot other than the selected timeslot which other timeslot has a lower outage probability than the selected timeslot;
replacing the selected timeslot with said other timeslot when the second contribution is greater than the first contribution; and
assigning the second RU to said other timeslot.

10. The method of claim 9 wherein the first and second contributions calculated by said RNC are performed using Gaussian approximations.

11. The method of claim 9, the RNC:

calculating total outage probability for the UE based on total RU allocation; and

accepting the UE when the calculated total outage probability of the UE is below a predetermined value.

12. The method of claim 11 wherein the total outage probability for the UE is performed using Gaussian approximations.

13. The method of claim 9, the RNC:

calculating total outage probability for the UE based on total RU allocation; and
rejecting the UE when the calculated total outage probability of the UE is greater than a predetermined value.

14. The method of claim 13 wherein the total outage probability for the UE is performed using Gaussian approximations.

15. Apparatus for performing call admission control (CAC) in real time in a wireless communication system, comprising, at least one user equipment (UE), at least one base station, and a radio network controller (RNC), comprising:

said UE comprising:

means for requesting communication with said network;

said RNC comprising:

means for calculating an outage probability for each uplink timeslot;
means for selecting a timeslot having a lowest outage probability;
means for assigning a resource unit (RU) to the selected timeslot and recalculating the outage probability; and

means for accepting the UE when the recalculated outage probability of the UE is below a predetermined value,
wherein the outage probabilities are calculated employing means for performing Gaussian approximations.

16. The apparatus of claim 15, said RNC further comprising:

means for recalculating the outage probability for the selected timeslot when the UE requires a second RU;
means for assigning an RU to the selected timeslot when the recalculated outage probability indicates that the selected timeslot continues to have the lowest outage probability;

means for calculating a total outage probability based on the RUs allocated to the UE; and
means for accepting the UE when the calculated total outage probability of the UE, based on the allocation of two RUs, is below a predetermined value.

**17.** The apparatus of claim 16, wherein the recalculated outage probability and the total outage probability are calculated by means for performing Gaussian approximations.

**18.** The apparatus of claim 15, said RNC further comprising:

means for calculating a first contribution to the total outage probability if the second RU is assigned to the selected timeslot when the UE requires a second RU;
means for calculating a second contribution to the total outage probability if the second RU is assigned to another timeslot other than the selected timeslot which other timeslot has a lower outage probability than the selected timeslot; and
means for assigning the second RU to the selected timeslot when the first contribution is greater than the second contribution.

**19.** The apparatus of claim 18 wherein the first and second contributions are calculated by means using Gaussian approximations.

**20.** The apparatus of claim 18, the RNC further comprising:

means for calculating total outage probability for the UE based on total RU allocation; and
means for accepting the UE when the calculated total outage probability of the UE is below a predetermined value.

**21.** The method of claim 20 wherein the total outage probability for the UE is performed by means using Gaussian approximations.

**22.** The apparatus of claim 20, the RNC comprising:

means for calculating total outage probability for the UE based on total RU allocation; and
means for rejecting the UE when the calculated total outage probability of the UE is greater than a predetermined value.

**23.** The apparatus of claim 15, said RNC further comprising:

means for calculating a first contribution to the total outage probability if the second RU is assigned to the selected timeslot when the UE requires a second RU;
means for calculating a second contribution to the total outage probability if the second RU is assigned to another timeslot other than the selected timeslot which other timeslot has a lower outage probability than the selected timeslot;
means for replacing the selected timeslot with said other timeslot when the second contribution is greater than the first contribution; and
means for assigning the second RU to said other timeslot.

**24.** The apparatus of claim 23 wherein the first and second contributions are calculated by means using Gaussian approximations.

**25.** The apparatus of claim 23, the RNC further comprising:

means for calculating total outage probability for the UE based on total RU allocation; and
means for accepting the UE when the calculated total outage probability of the UE is below a predetermined value.

**26.** The apparatus of claim 25 wherein the total outage probability is calculated using means for performing Gaussian approximations.

**27.** The apparatus of claim 23, the RNC further comprising:

means for calculating total outage probability for the UE based on total RU allocation; and
means for rejecting the UE when the calculated total outage probability of the UE is greater than a predetermined value.

**28.** The apparatus of claim 27 wherein the total outage probability for the UE is performed by means using Gaussian approximations.

FIG. 1

RNC

BS/NODE-B

102

104

103

UE

108

100

106

**FIG. 2**

**European Patent Office**

## EUROPEAN SEARCH REPORT

Application Number

EP 06 12 5412

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 750 440 A (NTT MOBILE COMMUNICATIONS NETWORK INC) 27 December 1996 (1996-12-27) <br> * abstract; figure 1 * <br> * page 3, line 19 - line 34 * <br> * page 11, line 24 - line 57 * | 1-28 | INV. <br> H04Q7/38 |
| A | YEONG M JANG ET AL: "A connection admission control usingtransient outage probability in CDMA systems" IEEE PROCEEDINGS 2000, vol. 3, 24 September 2000 (2000-09-24), pages 1412-1416, XP010524726 <br> * the whole document * | 1-28 | |
| A | BORGONOVO F ET AL: "Performance of a dynamic channel allocation technique based on signal strength measures" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, vol. 2, 18 May 1998 (1998-05-18), pages 1385-1389, XP010287938 ISBN: 0-7803-4320-4 <br> * the whole document * | 1-28 | |
| | | | TECHNICAL FIELDS SEARCHED (IPC) <br> H04Q <br> H04L |

The present search report has been drawn up for all claims

| Place of search | Date of completion of the search | Examiner |
|---|---|---|
| Munich | 9 February 2007 | Hultsch, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 5412

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2007

| Patent document cited in search report | | Publication date | Patent family member(s) | | Publication date |
|---|---|---|---|---|---|
| EP 0750440 | A | 27-12-1996 | CN | 1146700 A | 02-04-1997 |
| | | | CN | 1592177 A | 09-03-2005 |
| | | | DE | 69635539 T2 | 10-08-2006 |
| | | | US | 5838671 A | 17-11-1998 |

EPO FORM P0459

For more details about this annex : see Official Journal of the European Patent Office, No. 12/82